Europäisches Patentamt

European Patent Office

Office européen des brevets

(19)

(11) Numéro de publication: **0 061 977**

**A1**

# (12) DEMANDE DE BREVET EUROPEEN

(21) Numéro de dépôt: **82400592.0**

(22) Date de dépôt: **31.03.82**

(51) Int. Cl.³: **G 04 F 3/00**
**G 05 B 19/42**

(30) Priorité: **01.04.81 FR 8106515**

(43) Date de publication de la demande:
**06.10.82 Bulletin 82/40**

(84) Etats contractants désignés:
**AT BE CH DE GB IT LI LU NL SE**

(71) Demandeur: **Cognard, Pierre**
**8, rue Jean-Louis Forain**
**F-75017 Paris(FR)**

(72) Inventeur: **Cognard, Pierre**
**8, rue Jean-Louis Forain**
**F-75017 Paris(FR)**

(74) Mandataire: **Laget, Jean-Loup et al,**
**Cabinet Pierre Loyer 18, Rue de Mogador**
**F-75009 Paris(FR)**

(54) **Dispositif de commande d'applicateurs de produits fluides.**

(57) Dispositif de commande d'applicateurs de produits fluides.

Il comporte un bouton-poussoir 6 à deux positions, l'une de détermination, l'autre de reproduction de la durée; un contact fugitif 7 pour la détermination de la durée, un ensemble 11 d'affichage numérique de la durée; et un système 8, 9, 10 de mise en mémoire de la durée affichée.

Applications aux applicateurs de produits fluides ou pâteux.

EP 0 061 977 A1

1

## Dispositif de commande d'applicateurs de produits fluides.

L'invention concerne un dispositif de commande d'applicateurs de produits fluides.

Il existe dans de nombreux domaines industriels, des opérations faisant appel à un signal de durée. Sans parler des opérations purement temporelles, on peut penser à toutes les opérations de dosage de produits fluides ou pâteux comme les colles, les résines, les huiles, les graisses, les solvants, les réactifs divers, ou même les pâtes à souder ou à braser. Tous ces produits doivent en général être délivrés en quantité déterminée à partir d'un réservoir. A cet effet, il est connu d'utiliser des applicateurs électro-pneumatiques par exemple, qui au moyen d'un levier ou d'une pédale de commande, assurent le dosage tout en permettant à l'opérateur d'avoir les mains libres. Ces applicateurs sont étalonnés empiriquement et il est nécessaire, tout au long de l'application du produit, de maintenir le levier ou la pédale en position active. Il en résulte pour l'opérateur une gêne ou une fatigue préjudiciable à la qualité des opérations qu'il exécute. Par ailleurs la détermination expérimentale de la durée recherchée comme correspondant au meilleur dosage du produit fluide est longue et assez malcommode.

L'un des buts de la présente invention est d'éviter ces inconvénients en prévoyant un dispositif simple et de commande aisée pour la détermination d'une durée d'opération. Un autre but de la présente invention est d'assurer la mise en mémoire de cette durée en vue de sa reproduction automatique. Un autre but enfin de l'invention est d'assurer la reproduction de cette durée sur simple commande d'impulsion.

L'invention a pour objet un dispositif de commande d'applicateurs de produits fluides, destinés à assurer des dépôts répétitifs précis de produits de faible, moyenne et haute viscosité, du type dans lequel on détermine la durée d'application par totalisation de durées intermédiaires avec affichage, on reporte en mémoire la durée déterminée avec visualisation, et on commande la reproduction de la durée d'application au moyen d'un circuit électronique pourvu d'une commande à distance, caractérisé en ce qu'il comporte : un bouton-poussoir à deux positions stables, l'une de détermination de la durée, l'autre de reproduction de la durée ; un contact fugitif pour la détermination de la durée ; un ensemble d'affichage numérique de la durée ; et un système de mise en mémoire de la durée affichée.

Selon d'autres caractéristiques de l'invention :

- le système de mise en mémoire comporte essentiellement des roues codeuses en liaison avec un montage électronique,

- lorsqu'il est en pression, le contact fugitif assure simultanément la détermination de la durée voulue et l'affichage, avec maintien de cette durée par l'ensemble d'affichage,

- le contact fugitif assure la détermination de la durée par une ou plusieurs pressions correspondant à des durées intermédiaires, la durée déterminée résultant de la totalisation des durées intermédiaires,

- la commande à distance assure, pendant la phase de reproduction de la durée, la commande de la reproduction de la durée au moyen de son contact fugitif,

- pendant la phase de reproduction de la durée, le système de mise en mémoire de la durée affichée permet la rectification éventuelle de ladite durée, en plus ou en moins, par incréments.

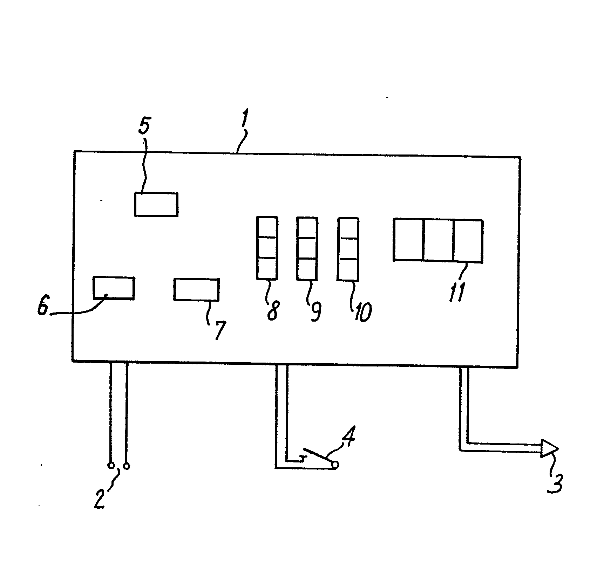

D'autres caractéristiques ressortiront de la description qui suit, faite avec référence au dessin annexé sur lequel on peut voir :

un schéma symbolique d'un exemple de réalisation d'un dispositif de commande d'applicateurs de produits fluides, selon l'invention.

En se reportant au dessin, on voit que le dispositif de commande d'applicateurs de produits fluides est compris dans un boîtier 1 alimenté en courant électrique en 2 et délivrant un signal de sortie en 3. Ce dispositif est muni d'une commande à distance telle qu'une pédale 4 par exemple. Sur la face avant du boîtier 1, on trouve essentiellement : un bouton-poussoir 5 à deux positions faisant office d'interrupteur général ; un deuxième bouton-poussoir 6 à deux positions permettant de mettre le dispositif en position de détermination de durée ; un troisième bouton-poussoir 7 à une seule position stable mais pouvant assurer un contact fugitif ; des roues codeuses 8, 9, 10 ; et une fenêtre 11 d'affichage numérique dont le nombre de chiffres est égal au nombre de roues codeuses.

Lorsque le bouton 5 est enfoncé, il autorise le fonctionnement général du dispositif. Lorsque le deuxième bouton 6 est enfoncé en position de détermination de durée, la pédale de commande 4 est rendue inefficace, et l'affichage est allumé sur la position 000. Si l'on enfonce alors le bouton-poussoir 7 à contact fugitif, et tant que ce bouton reste enfoncé, une séquence chronométrique est déclenchée, le nombre de secondes et de dixièmes de secondes par exemple étant affiché en 11. Si l'on relâche le bouton 7, le comptage s'arrête et reste affiché. Pendant le temps où le bouton 7 est enfoncé, un signal de sortie est délivré en 3 et l'opérateur peut apprécier la durée optimale du signal de sortie. Si la durée qu'il a prévue, 6 secondes par exemple, lui paraît insuffisante, il appuie de nouveau sur le bouton 7 pendant 2 secondes par exemple et la fenêtre 11 affiche la durée cumulée des deux pressions sur le bouton 7, soit 8 secondes, tandis que le signal délivré en 3 vient s'ajouter au précédent, dans le temps.

Lorsque l'opérateur estime que la durée du signal délivré en 3 est optimale, il manipule les roues codeuses 8, 9, 10 pour y reproduire le temps affiché en 11.

Il ramène alors le bouton 6 de détermination de durée à sa première position, ce qui éteint l'affichage et autorise la commande par la pédale 4.

A partir de ce moment, chaque fois que l'opérateur appuie sur la pédale 4, il déclenche par une seule commande fugitive l'émission en 3 d'un signal dont la durée est égale à la durée apparente sur les roues codeuses et ainsi mise en mémoire. L'affichage est apparent et évolue tout le long de cette durée. A la fin de la durée mémorisée, le signal délivré en 3 prend fin et tout l'ensemble est ramené à zéro pour une nouvelle séquence.

Si après quelques opérations l'opérateur veut corriger la durée mémorisée, il lui suffit d'agir sur les roues codeuses pour modifier la durée et afficher la nouvelle durée retenue qui sera celle des opérations suivantes.

Ainsi, avec un minimum d'organes de réglage à sa disposition et un minimum de manoeuvres, l'opérateur peut déterminer et régler la durée du signal qu'il désire et la reproduire par simple commande fugitive. Le bouton-poussoir fugitif 7 assure la détermination de la durée par une ou plusieurs pressions, et simultanément, l'exécution d'une opération, avec affichage du temps en permanence et avec maintien de cet affichage après libération du bouton 7.

En ce qui concerne la commande à distance, à la place de la pédale décrite précédemment, on peut prévoir un micro-contact, un relais de fin de course ou une cellule photo-électrique par exemple, sans que cette énumération soit limitative.

En résumé, avec le dispositif selon l'invention, la séquence des manoeuvres à effectuer est la suivante :

- mise en marche par le bouton 5,

- mise en position de détermination de durée par le bouton 6,

- détermination et affichage du temps voulu, par le bouton 7,

- mise en mémoire du temps affiché, par les roues codeuses 8, 9, 10,

- mise en position de reproduction de durée par le bouton 6,

- commande d'exécution par la pédale 4 avec reproduction du temps mémorisé,

- éventuellement, correction du temps mémorisé par action sur les roues codeuses 8, 9, 10.

Le circuit électronique en lui-même n'est pas décrit car il est composé d'éléments connus en eux-mêmes et qui peuvent être remplacés par des équivalents techniques. De même, on a mentionné, pour la mise en mémoire de la durée, un ensemble de roues codeuses, il va de soi que tout autre système équivalent peut être utilisé.

Le dispositif selon l'invention est utilisable particulièrement pour la commande d'applicateurs de produits, c'est-
à-dire pour assurer des dépôts répétitifs précis de produits de faible, moyenne et haute viscosité.

Il est également applicable à la commande d'opérations de
durée déterminée, par exemple dans le cas où l'on doit
assurer un apport de calories précis au moyen d'un rayonnement infrarouge, par induction ou par canon à air chaud,
afin d'opérer des jonctions de brasure dure ou tendre, ou
même un apport d'énergie, par exemple au moyen d'un faisceau
laser.

Revendications de brevet.

1. Dispositif de commande d'applicateurs de produits fluides, destiné à assurer des dépôts répétitifs précis de produits de faible, moyenne et haute viscosité, du type dans lequel on détermine la durée d'application par totalisation de durées intermédiaires avec affichage, on reporte en mémoire la durée déterminée avec visualisation, et on commande la reproduction de la durée d'application au moyen d'un circuit électronique pourvu d'une commande à distance, caractérisé en ce qu'il comporte : un bouton-poussoir (6) à deux positions stables, l'une de détermination de la durée, l'autre de reproduction de la durée ; un contact fugitif (7) pour la détermination de la durée ; un ensemble (11) d'affichage numérique de la durée ; et un système de mise en mémoire de la durée affichée.

2. Dispositif selon la revendication 1, caractérisé en ce que le système de mise en mémoire comporte essentiellement des roues codeuses (8, 9, 10) en liaison avec un montage électronique.

3. Dispositif selon la revendication 1, caractérisé en ce que, lorsqu'il est en pression, le contact fugitif (7) assure simultanément la détermination de la durée voulue et l'affichage, avec maintien de cette durée par l'ensemble d'affichage (11).

4. Dispositif selon la revendication 3, caractérisé en ce que le contact fugitif (7) assure la détermination de la durée par une ou plusieurs pressions correspondant à des durées intermédiaires, la durée déterminée résultant de la totalisation des durées intermédiaires.

5. Dispositif selon la revendication 1, caractérisé en ce que la commande à distance (4) assure, pendant la phase de reproduction de la durée, la commande de la reproduction de la durée au moyen de son contact fugitif.

6. Dispositif selon l'une des revendications 1 ou 2, caractérisé en ce que, pendant la phase de reproduction de la durée, le système de mise en mémoire de la durée affichée permet la rectification éventuelle de ladite durée, en plus ou en moins, par incréments.

# 0061977

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | GB - A - 2 028 539 (AMF INC.)<br><br>* page 1, ligne 1 - page 3, ligne 52 * | 1 | G 04 F 3/00<br>G 05 B 19/42 |
| | -- | | |
| Y | REVIEW OF SCIENTIFIC INSTRUMENTS, vol.47, no.9, septembre 1976 NEW YORK (US)<br>H.C. VILJOEN et al.: "Electronic system for optical shutter control"<br>pages 1133-1141<br><br>* page 1133, colonne de gauche, avant-dernier paragraphe - page 1134, premier paragraphe * | 1-6 | |
| | -- | | |
| Y | US - A - 3 930 142 (C.H. MEIER)<br><br>* colonne 2, ligne 21 - colonne 3, ligne 61 * | 1-4 | |
| | -- | | |
| A | FR - A - 2 426 285 (DR. J. HEIDENHAIN GmbH)<br><br>* pages 1-2 * | 1 | |
| | -- | | |
| | ./.. | | |

**DOMAINES TECHNIQUES RECHERCHES (Int. Cl. 3)**

G 04 C
G 04 F
G 04 G
G 05 B

Le présent rapport de recherche a été établi pour toutes les revendications

| Lieu de la recherche | Date d'achevement de la recherche | Examinateur |
|---|---|---|
| La Haye | 1er juillet 1982 | EXELMANS |

**0061977**

Office européen
des brevets

**RAPPORT DE RECHERCHE EUROPEENNE**

Numéro de la demande

EP 82 40 0592

-2-

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| A | JOURNAL OF ELECTRONIC ENGINEERING, vol.18, no.170, février 1981, TOKYO (JP) T. NAKANO: "Electronic timers expanding application ranges" pages 62-64 | | |
| | * page 64 * | 1 | |
| | -- | | |
| A | US - A - 4 059 954 (W.G. PLANKER-MANN) | | DOMAINES TECHNIQUES RECHERCHES (Int. Cl.³) |
| | * colonne 1, ligne 1 - colonne 2, ligne 21 * | 1 | |
| | ----- | | |

OEB Form 1503.2   06.78